# EUROPEAN PATENT SPECIFICATION

(11) **EP 1 583 414 B1**
(45) Date of publication and mention of the grant of the patent: **29.09.2010**
(21) Application number: 04700138.3
(22) Date of filing: 05.01.2004
(51) Int. Cl.: A01G 9/14

(54) **POLYTUNNEL SYSTEM**
MEHRTUNNELSYSTEM
SYSTEME DE TUNNEL

(30) Priority: 07.01.2003 GB 0300253
(43) Date of publication of application: 12.10.2005
(73) Proprietor: Haygrove Limited, Ledbury, Herefordshire HR8 2JL (GB)
(72) Inventor: CORBETT, Thomas, Robert, Westhope Herefordshire HR4 8BU (GB)
(74) Representative: Bailey, Richard Alan
(86) International application number: PCT/GB2004/000003
(87) International publication number: WO 2004/060046

(56) References cited:
- FR-A- 2 373 960
- FR-A- 2 507 056
- FR-A- 2 788 290
- GB-A- 2 070 663

## Description

This invention relates to a polytunnel system for use in the cultivation of crops.

A polytunnel intended for use in a field typically comprises a pair or rows of legs, each leg of one row together with a corresponding leg of the other row supporting a hoop member. A plastics material covering is stretched over the hoop members to form a tunnel.

The ends of the polytunnel may be of increased rigidity compared to the remainder of the polytunnel, and this may be achieved by using end frames of the type described in GB 0210091.5

A polytunnel of this type may be of relatively large internal volume. At the beginning and end of the growing season, the outdoor temperature is relatively low. Due to the reduced amount of solar heat available during these parts of the growing season the large volume of air within the tunnel requires more heating. Consequently the plants take longer to reach their optimum growing temperature and if artificial hearing is used, it will be relatively expensive due to the large volume of air to be heated.

During the middle part of the growing season the polytunnel is used primarily to provide rain cover for the crop. At this time it is desirable to maximise the air volume within the polytunnel to slow down the rate at which the temperature within the tunnel increases.

Obviously, there is a conflict between the optimum tunnel design for use at the beginning and end of the growing season and for a middle part of the growing season.

GB 2070663 describes a polytunnel system of adjustable height.

It is an object of the invention to provide a polytunnel system whereby the above disadvantages can be reduced.

According to the present invention there is provided a polytunnel system comprising a plurality of cover support members, a series of leg members and a cover, the cover support members being supported by associated ones of the leg members , wherein the cover support members are securable to the leg members at a plurality of different heights, and movable rope anchorage points, the vertical positions of which can be adjusted.

By permitting the cover support members to be secured to the leg members at a range of heights, the height of the polytunnel, and hence the internal volume thereof, can be varied. As a result, the internal volume of the polytunnel can be reduced during those parts of the growing season when the polytunnel requires hearing, improving efficiency, whilst allowing the tunnel height to be increased to increase air flow through the tunnel when this is desired.

Conveniently, each leg member carries a bracket which, in turn, carries the associated cover support member, the bracket being securable to the leg member in a range of positions. Each leg member may be provided with a series of openings registerable with an opening provided in the bracket to allow the bracket to be secured in position by introducing a pin into the opening of the bracket and the opening of the leg member which is aligned therewith.

The invention will further be described, by way of example, with reference to the accompanying drawings, in which:
Figure 1 is a diagrammatic perspective view of polytunnels in accordance with an embodiment of the invention;
Figures 2 and 3 are views illustrating part of a polytunnel in two different configurations; and
Figure 4 is a view of part of an alternative embodiment.

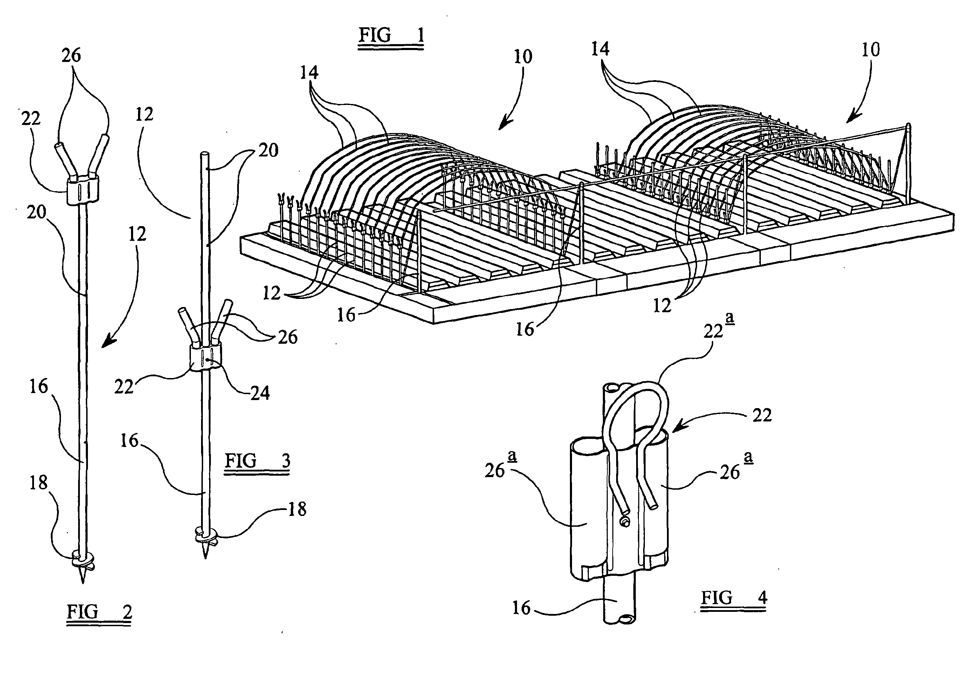

Figure 1 illustrates, diagrammatically, a pair of polytunnels 10. Each tunnel 10 comprises a pair of rows of leg members 12 and a series of cover support members 14. Each cover support member 14 is carried by one of the leg members 12 of one of the rows, and a corresponding leg member 12 of the other of the rows. In use, a plastics material cover (not shown) is stretched over the cover support members 14 and secured in position using, for example, a series of ropes stretched over the cover and anchored into the ground.

Each end of each polytunnel 10 is provided with a relatively rigid end frame structure including a pair of end frames 16, this structure being of the type described in co-pending British Patent Application No. 0210091.5.

Each of the leg members 12 comprises an upright 16, the lower end of which is provided with an anchorage arrangement 18 to allow the leg member 12 to be secured in an upright manner in the ground. The upright 16 is provided with a series of openings 20 spaced apart along the length thereof. A bracket 22 is carried by the upright 16, the bracket 22 including a passage through which the upright 16 extends, and an opening 24 which can be brought into alignment with the openings 20 formed in the upright 16. The bracket 22 further includes a pair of arms 26 to which the cover support members 14 can be secured. A securing pin (not shown) is used to secure the bracket 22 to the upright 16 in a selected position by moving the bracket 22 to bring the opening 24 thereof into alignment with one of the openings 20 of the upright 16 and then introducing the securing pin into the aligned openings to secure the bracket 22 against movement along the upright 16.

It will be appreciated that as the bracket 22 has a pair of arms 26, it can be used in supporting the upper cover support members 14 of a pair of adjacent tunnels.

Referring to Figure 1, the left hand polytunnel, 10 is of relatively large height, the brackets 22 thereof being secured to the uprights 16 of the leg members 12 adjacent the upper end of each leg member 12 (see Figure 2). In this condition, as the tunnel contains a relatively high volume of air, heating of the polytunnel during the middle part of the growing season is relatively slow. The right hand polytunnel illustrated in Figure 1 is of reduced height, the brackets 22 having been secured to the uprights 16 in a relatively low position (see Figure 3). In this condition, the volume of air within the polytunnel is relatively low with the result that heating of the polytunnel, for example towards the beginning and end of the growing season can be achieved in a relatively economic manner.

In use, the polytunnel can be erected in the condition shown in the right hand part of Figure 1, and as the growing season progresses the brackets 22 can be lifted, increasing the height of the polytunnel to that illustrated in the left hand part of Figure 1. Again, as the growing season progresses and a point is reached beyond which it is desirable to heat the air within the polytunnel, then the height of the polytunnel, can be reduced by lowering each bracket 22, returning the polytunnel towards the configuration illustrated in the right hand part of Figure 1.

Although the description hereinbefore suggests that the main advantage of providing a polytunnel of adjustable height is that the volume of air within the tunnel can be changed depending upon the ambient conditions, a further advantage of the polytunnel of adjustable height is that the height, and hence the cross-section of the tunnel exposed to the atmospheric or wind conditions can be altered. The risk of damage to the polytunnel caused by exposure to high winds can also therefore be reduced. As the windiest atmospheric conditions tend to occur towards the beginning and end of the growing season, and as during these parts of the growing season it would be usual to place the polytunnel into the condition illustrated in the right hand part of Figure 1, usually no specific action would be necessary to achieve this advantageous effect.

In the arrangement described hereinbefore the cover support members 14 are of tubular form and slot onto or over the arms 26. This need not be the case and Figure 4 illustrates a modification in which the ends of the cover support members 14 are receivable within sockets 26a of generally tubular form attached to the bracket 22. This enables the polytunnel structure to be of improved strength. The sockets 26a are orientated so as to support the ends of the cover support members 14 in a vertical or near vertical configuration. As a result, rain water tends to flow generally vertically downward from the cover rather than at an angle, thereby reducing the risk of crop damage. Further, the gap between the covers of adjacent tunnels can be reduced.

The bracket 22 shown in Figure 4 additionally includes a fixing ring 22a to which the ropes used to secure the covering in position can be anchored. As the ring 22a is raised or lowered when the height of the tunnel is changed, re-securing of the ropes upon adjustment of the tunnel height is avoided.

Although the description hereinbefore is specific polytunnel arrangement of adjustable height, it will be appreciated that other techniques may be employed to vary the height of the polytunnel, in use, and that all such modifications fall within the scope of the present application.

## Claims

1. A polytunnel system comprising a plurality of cover support members (14), a series of leg members (16) and a cover, the covers support members (14) being supported by associated leg members (16), wherein the cover support members (14) are securable to the leg members (16) at a plurality of different heights, and **characterised by** movable rope anchorage points (22a), the vertical positions of which can be adjusted.

2. A system according to Claim 1, wherein each leg member (16) carries a bracket (22) which, in turn, carries the associated cover support member (14), the bracket (22) being securable to the leg member (16) in a range of positions.

3. A system according to Claim 2, wherein each bracket (22) defines a passage through which the associated leg member (16) extends.

4. A system according to Claim 3, wherein the bracket (22) defines an opening and the associated leg member (16) is provided with a series of openings, a fixing pin being locatable within the opening of the bracket (22) and selected one of the openings of the leg member (16) to secure the bracket (22) in a selected position.

5. A system according to claim 2, wherein each bracket (22) includes at least one arm (26) onto or over which part of an associated cover support member (14) can be located.

6. A system according to any one of Claims 2 to 4, wherein each bracket (22) includes at least one socket (26a) arranged to receive an end part of an associated cover support member (14).

7. A system according to anyone of the preceding claims, wherein the ends of the cover support members (14) extend generally vertically.

8. A bracket adapted for use in a system according to Claim 2.

## Patentansprüche

1. Polytunnelsystem, das mehrere Abdeckungsstützelemente (14), eine Reihe von Beinelementen (16) und eine Abdeckung umfasst, wobei die Abdeckungsstützelemente (14) durch zugeordnete Beinelemente (16) gestützt werden, wobei die Abdeckungsstützelemente (14) bei mehreren unterschiedlichen Höhen an den Beinelementen (16) befestigt werden können, und **gekennzeichnet durch** bewegliche Seilverankerungspunkte (22a), deren vertikale Position eingestellt werden kann.

2. System nach Anspruch 1, wobei jedes Beinelement (16) einen Halter (22) trägt, der wiederum das zugeordnete Abdeckungsstützelement (14) trägt, wobei der Halter (22) in einer Auswahl von Positionen an dem Beinelement (16) befestigt werden kann.

3. System nach Anspruch 2, wobei jeder Halter (22) einen Durchgang definiert, durch den sich das zugeordnete Beinelement (16) erstreckt.

4. System nach Anspruch 3, wobei der Halter (22) eine Öffnung definiert und das zugeordnete Beinelement (16) mit einer Reihe von Öffnungen versehen ist, wobei ein Befestigungsstift innerhalb der Öffnung des Halters (22) und einer ausgewählten der Öffnungen des Beinelements (16) angeordnet werden kann, um den Halter (22) in einer ausgewählten Position zu befestigen.

5. System nach Anspruch 2, wobei jeder Halter (22) wenigstens einen Arm (26) einschließt, an dem oder über dem ein Teil eines zugeordneten Abdeckungsstützelements (14) angeordnet werden kann.

6. System nach einem der Ansprüche 2 bis 4, wobei jeder Halter (22) wenigstens eine Hülse (26a) einschließt, die dafür angeordnet ist, ein Endteil eines zugeordneten Abdeckungsstützelements (14) aufzunehmen.

7. System nach einem der vorhergehenden Ansprüche, wobei sich die Enden der Abdeckungsstützelemente (14) im Allgemeinen in Vertikalrichtung erstrecken.

8. Halter, der für eine Verwendung in einem System nach Anspruch 2 eingerichtet ist.

## Revendications

1. Système de tunnel, comprenant plusieurs éléments de support de couverture (14), une série d'éléments de branche (16) et une couverture, les éléments de support de la couverture (14) étant supportés par des éléments de branche associés (16), les éléments de support de la couverture (14) pouvant être fixés sur les éléments de branche (16) au niveau de plusieurs hauteurs différentes, et **caractérisé par** des points d'ancrage d'un câble (22a), dont les positions verticales peuvent être ajustées.

2. Système selon la revendication 1, dans lequel chaque élément de branche (16) supporte un support (22), supportant à son tour l'élément de support de la couverture associé (14), le support (22) pouvant être fixé sur l'élément de branche (16) à différentes positions.

3. Système selon la revendication 2, dans lequel chaque support (22) définit un passage à travers lequel s'étend l'élément de branche associé (16).

4. Système selon la revendication 3, dans lequel le support (22) définit une ouverture, l'élément de branche associé (16) comportant une série d'ouvertures, une goupille de fixation pouvant être positionnée dans l'ouverture du support (22) et dans une ouverture sélectionnée des ouvertures de l'élément de branche (16) pour fixer le support (22) dans une position sélectionnée.

5. Système selon la revendication 2, dans lequel chaque support (22) englobe au moins un bras (26), sur lequel ou au-dessus duquel peut être agencée une partie du support associé de la couverture (14).

6. Système selon l'une quelconque des revendications 2 à 4, dans lequel chaque support englobe au moins une douille (26a) agencée de sorte à recevoir une partie d'extrémité d'un élément de support de la couverture associé (14).

7. Système selon l'une quelconque des revendications précédentes, dans lequel les extrémités des éléments de support de la couverture (14) s'étendent en général dans une direction verticale.

8. Support adapté pour être utilisé dans un système selon la revendication 2.
